(19) **Europäisches Patentamt / European Patent Office / Office européen des brevets**

(11) **EP 4 745 838 A1**

(12) **EUROPEAN PATENT APPLICATION**

(43) Date of publication:
**20.05.2026 Bulletin 2026/21**

(21) Application number: **24213908.7**

(22) Date of filing: **19.11.2024**

(51) International Patent Classification (IPC):
**G06N 3/0442** (2023.01)     **G06N 3/0455** (2023.01)
**G06N 3/0475** (2023.01)     **G06F 40/56** (2020.01)

(52) Cooperative Patent Classification (CPC):
**G06N 3/0455; G06F 40/56; G06N 3/0442; G06N 3/0475**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
- **STREM, Nika**
  **68163 Mannheim (DE)**
- **MACZEY, Sylvia**
  **69493 Hirschberg (DE)**
- **HUEHNERBEIN, Ruben**
  **69123 Heidelberg (DE)**
- **ZHANG, Yanqing**
  **11218 Stockholm (SE)**

- **BRORSSON, Emmanuel**
  **72469 Västerås (SE)**
- **ZIOBRO, Dawid**
  **72462 Västerås (SE)**
- **MANCA, Gianluca**
  **80935 München (DE)**
- **BUELOW, Fabian**
  **68526 Ladenburg (DE)**
- **DIX, Marcel**
  **78476 Allensbach (DE)**
- **KOTRIWALA, Arzam Muzaffar**
  **68526 Ladenburg (DE)**
- **BHATTACHARYA, Nilavra**
  **68167 Mannheim (DE)**

(74) Representative: **Maiwald GmbH**
**Engineering**
**Elisenhof**
**Elisenstrasse 3**
**80335 München (DE)**

(54) **AUTO-GENERATION OF TEXTUAL TIME SERIES DESCRIPTIONS**

(57) The invention relates to a method (100) for automatically generating a textual description of time series for monitoring or forecasting a process variable, comprising the steps of training (110) a deep learning model on a cross-modal autoencoding module (10) having an architecture consisting of a time series encoder (11), a text decoder (12) and a time series decoder (13), obtaining (120) time series data by invoking a display of readings of the temporal process variable, encoding (130), by means of the time series encoder (11) and based on the deep learning model, the time series data and generating an embedding as input for the text decoder (12), transferring (140) the generated embedding from the time series encoder (11) to the text decoder (12), and generating (150), by means of the text decoder (12) and based on the deep learning model, the textual description of time series based on the embedding of the encoded time series data from the time series encoder (11).

Fig. 1

**Description**

**FIELD OF INVENTION**

The present disclosure relates to industrial process automation. In particular, the present disclosure relates to a method for automatically generating a textual description of time series for monitoring or forecasting a process variable, a computer program and a data processing system.

**BACKGROUND**

Recently, auto-generation of textual descriptions for time series data becomes a rapidly advancing field combining Natural Language Processing, NLP, and time series analysis. With the increasing volume of sequential data from sources like IoT systems and sensing systems as examples, there is a growing need for tools that can convert complex numerical data into human-readable insights. Traditional data analysis often relies on graphs and statistical metrics, which require expert interpretation. However, automated textual descriptions can democratize data understanding, allowing even non-experts to gain insights from time series data effectively.

In particular, plant operators need to monitor numerous processes to ensure safe and efficient production. In addition to recent trends in given process variables, a modern distributed computer system, DCS, need to be able to also display forecasts of signals of interest as well as sensor readings which explain predictions of failures or anomalies output by machine learning, ML, models. Displaying this additional information however may be problematic due to existing user interface, UI, and screen space limitations.

Typically, in order to gain insights about the state of the plant, displays of readings of a sensor may be invoked to valuate certain temporal variables of interest. Such display can also be triggered by the system itself, e.g., if an alarm threshold is crossed. When the DCS incorporates the ML techniques, it may show a forecast for a given process variable, or predict an alarm or failure and show an anomalously behaving signal as an explanation of the predicted event. However, the screen space may be limited. Moreover, user interface aspects need to be reconsidered to accommodate for such emergent features. As to field operators, they may have only a very small screen with them, or even none at all.

Despite the recent surge in the development of large language models, LLMs, advancements in natural text generation NLG have not yet extended to the problem of time series description due to the lack of big training datasets. In particular, it is hard to train a model which produces text that is not only human-like but also accurate with reference to the time series it describes.

**SUMMARY**

It may be seen as an objective of the invention to provide a more flexible and convenient alternative or complement system for showing a plot of a signal in an efficient and reliable auto-generation system.

The objective is achieved by the subject matter of the independent claims. The dependent claims, the following description and the drawings show embodiments of the invention.

According to a first aspect of the present disclosure, there is provided a method for automatically generating a textual description of time series for monitoring or forecasting a process variable. The method comprises the following steps:

- training a deep learning model on a cross-modal autoencoding module having an architecture consisting of a time series encoder, a text decoder and a time series decoder;
- obtaining time series data by invoking readings of the temporal process variable;
- encoding, by means of the time series encoder and based on the deep learning model, the time series data and generating an embedding as input for the text decoder;
- transferring the generated embedding of the encoded time series data from the time series encoder to the text decoder;
- generating, by means of the text decoder and based on the deep learning model, the textual description of time series based on the embedding of the encoded time series data from the time series encoder.

Time series data may be understood to consist of sequential data points collected or recorded at specific time intervals. The time series data may capture the temporal dependencies and patterns of a variable over time, commonly used in forecasting, trend analysis, and anomaly detection across fields like plant operations, sensing technology and/or process monitoring.

A textual description of a time series may be understood as a narrative summarizing key patterns, trends, and anomalies within sequential data. It may translate complex numerical insights into natural language, helping, for example, a plant operator understands changes, peaks, or recurring behaviors over time, and is valuable for data interpretation in fields of plant operations.

A cross-modal autoencoding module or a cross-modal autoencoding method may be understood as a model training technique that learns to reconstruct data of one modality via another modality in a cross-modal setup. This means that an explicit representation of an object or process in one modality (e.g., a sequence of images constituting a video, or time series representing temperature measurements) is encoded into a latent representation and then decoded into another modality (e. g. an audio track of a video or a textual description of temperature measurements over time). Thereupon, a latent representation of this second modality is decoded back into the original modality. This approach enables the model to capture relationships between different data modalities, facilitating tasks like image-to-text generation or audio-to-image synthesis. Cross-modal autoencoding is useful in applications requiring multimodal understanding, such as translating visual data into textual descriptions or generating audio based on text. Thus, the cross-modal autoencoding may be performed as a novel training technique for conditional NLG (Natural Language Generation) with small datasets, whereby during pretraining the deep learning model may be trained to generate textual descriptions of time series and reconstruct time series based on the produced text.

Using the modeling system trained with the above-described method of the cross-modal autoencoding module having the time series encoder, the text decoder and the time series decoder may enable flexible multimodal user experience by automatically generating a textual description of time series, which may be communicated either as a concise textual warning message or as an audio message using existing text-to-speech technologies.

The time series encoder may be designed to produce one or more embeddings for the text decoder by transforming sequential numerical data into a fixed-dimensional representation, or embedding. In other words, temporal patterns and dependencies may be captured. The time series encoder may process the sequential time series data and compress it into a context vector or embedding. This embedding represents the temporal structure and key features of the input sequence. For example, the time series encoder may be, but not limited to be, LSTM (Long Short-Term Memory), GRU (Gated Recurrent Unit) or a transformer.

The embedding may then be passed to the text decoder, for example, a transformer or RNN-based decoder in a sequence-to-sequence model. The text decoder may then interpret the encoded information and generate a corresponding text sequence, one token at a time, based on the learned or trained patterns from the time series data. Using the context provided by the embedding, the text decoder may output text aligned with the temporal insights from the original time series data.

According to an embodiment, the step of the training the deep learning model may comprise the substep of training or activating the time series decoder and enabling the cross-modal autoencoding module.

According to another embodiment, the step of the training the time series decoder and the enabling the cross-modal autoencoding module may comprise the substeps of:

- transferring the textual description of time series from the text decoder (12) to the time series decoder;
- reconstructing the time series data, or generating, by means of the time series decoder and based on the deep learning model, second time series data as reconstructed time series data based on the generated textual description.

Accordingly, the step of the training the deep learning model is performed with the cross-modal autoencoding module based on the reconstructed time series data as the second time series data.

The method may involve reconstructing the input time series based on the embedding of its description generated by the text encoder at the training stage as a way of pretraining and optionally discarding the time series decoder. This technique may be aimed at guiding the model to better learn the correlations between time series and their descriptions with small datasets.

The text embedding serving as input to the time series decoder may be a concatenation of the outputs of the penultimate layer of the text decoder or a different kind of a hidden representation extracted from the text decoder depending on its architecture.

By reconstructing the time series based on its textual description generated by the text decoder, the method of the present disclosure of transfer learning enhanced by cross-modal autoencoding may advantageously allow training a sufficiently accurate text generation model by relying on a small training dataset, without expensive data annotation and costly computations required by big models and with only small language models, LMs, thus saving resources.

According to another embodiment, a loss for the reconstructing the time series data may be scaled by a coefficient $\alpha$ for a balanced training, so that the combined loss L may be calculated by a function:

$$L = \alpha L_{txt} + (1 - \alpha)L_{tx}.$$

wherein $L_{txt}$ is a text generation loss and $L_{tx}$ is a time series reconstruction loss.

According to another embodiment, the loss function for the reconstructing the time series data may be a regression loss.

According to another embodiment, the step of training the time series decoder and enabling the cross-modal autoencoding module may comprise the substep of initializing the time series encoder and/or the text decoder and/or the time series decoder by means of a pretrained model.

According to another embodiment, the step of initializing the time series encoder and/or the text decoder and/or the time series decoder may comprise the substep of initializing the time series encoder and the text decoder and the time series decoder with pretrained model weights.

Initializing the time series encoder, the text decoder and the time series decoder with pretrained model weights may provide advantages of enhanced performance, reduced training time and improved robustness. In particular, pretrained weights may capture generalized patterns and features from relatively large datasets, enabling models to learn more effectively and improving accuracy in producing the relevant textual description from the time series data. The deep learning model initialized with pretrained weights may converge faster, reducing the amount of the time series data and time needed to reach optimal performance. This is especially useful when data resources are limited.

Moreover, the pretrained models may be able to bring knowledge from broader data sources, making them adaptable to specific domains with minimal fine-tuning. Also, the pretraining may impart resilience against overfitting and enhance the model's ability to generalize, ensuring it produces accurate and coherent text descriptions even for complex or nuanced patterns in the time series data.

According to another embodiment, the step of the training the deep learning model may further comprise the substep of pretraining the deep learning model in a self-supervised manner on an unlabeled time series dataset comprising the unlabeled time series data and/or an unlabeled second time series dataset comprising the unlabeled second time series data and/or on a corpus of time series descriptions.

In general, there are two main requirements to time series descriptions: faithfulness to data (truthfully describing relevant properties of a time series window) and readability (grammatically correct and stylistically appropriate). Initializing the text decoder of the model may be aimed at fulfilling the later, namely the readability, while the first requirement of faithfulness to data may remain challenging due to the absence of big, curated datasets of parallel time series samples and their descriptions. Pretraining the time series encoder on unlabeled time series in the self-supervised manner may help improve the representation learning capacity of the model. Yet to reinforce the learning of correlations between patterns in time series and textual descriptions, the method of the present disclosure using the cross-modal autoencoding module resulting in the overall trend of a time series sample being reconstructed from its textual description.

According to another embodiment, the step of the training the deep learning model may further comprise the substep of discarding the time series decoder.

According to another embodiment, the step of the training the deep learning model may further comprise the substep of augmenting the time series dataset for the training the deep learning model, which step may further comprise the substeps of increasing an annotated time series dataset by adding noise to the annotated time series dataset and/or increasing a respective textual description of the annotated time series dataset by paraphrasing the textual description using open-source large language models, LLMs.

For example, the open-source LLMs may be, but not limited to be, GPT-based models, such as GPT-Neo, GPT-J, GPT-2 and GPT-3 from OpenAI, BERT and its variants, such as RoBERTa and DistilBERT, Mitral:7b, Gemma, Llama-2 or T5 as Text-to-Text Transfer Transformer. These models, typically built on transformer architectures, may excel at tasks like paraphrasing, summarization, and text generation. This may advantageously allow training a sufficiently accurate text generation model by relying on a small training dataset as starting training basis.

According to another embodiment, the step of the reconstructing the time series data by means of the cross-modal autoencoding module may be performed as a task of a full reconstruction, a reconstruction of partially masked time series, or reordering of scrambled time series.

According to another embodiment, the step of enabling cross-modal autoencoding module may be used in parallel or before a final training or a fine tuning on a primary task of the generating the textual description of time series.

According to another embodiment, the cross-modal autoencoding module may be performed as a contrastive learning approach.

According to another embodiment, a backbone of the time series encoder or of the text decoder or of the time series decoder may be a transformer or a long short-term memory, such that hidden dimensions of each of the time series encoder, the text decoder and the time series decoder can be compatible with each other or can be adjusted with an extra linear layer.

According to another embodiment, the time series encoder and the time series decoder may share the same structure and weights up until an encoder output layer of the time series encoder generating the embedding for the text decoder and a decoder output layer of the time series decoder generating the reconstructed second time series data.

An output layer may be understood as a final layer in a neural network, responsible for producing the model's predictions based on the learned features from previous layers. It transforms the network's outputs into the desired format, for example, classification labels, text tokens, or regression values.

According to another embodiment, the method may further comprise the step of outputting the generated textual description of time series of the text decoder by displaying a textual warning message or by outputting an audio message by means of a text-to-speech, TTS, approach.

For example, the TTS may be, but not limited to be, a concatenative TTS, a parametric TTS, a deep learning TTS, such as Tacotron, a WaveNet or an End-to-End TTS, such as FastSpeech.

In view of the above, the method of the present disclosure of automatic generation of time series descriptions may comprise building a deep learning model comprising the time series encoder, the text decoder and the time series decoder and optionally initializing each of these components with weights of pretrained models as well as optionally pretraining each of these components in a self-supervised approach. The deep learning model may also be pretrained on a cross-modal autoencoding task comprising reconstructing the input time series based on the embedding of its description generated by the text encoder to reinforce the model's capacity to learn correlations between patterns in time series and text, such as an upward trend in the signal and words like 'rise', 'increase', or 'go up' in the description. Finally, the time series decoder component may be discarded, and the rest of the model may be used as intended on the main task of text generation.

For a long time, automatic generation of time series descriptions was on the margin of the general NLG research and involved very elaborate rule-based systems. Even after the advent of rather powerful LMs, surprisingly few studies have tried using them in the time series domain. A rather recent example first learns to identify a predefined set of patterns in the input time series and then trains an LSTM-based network to generate a description based on the predicted patterns. A train set of 5700 time series descriptions has been crowdsourced for the task. In view of the surge in popularity of LLMs however, a number of studies have tried applying them to time series. A number of approaches tackling time series related tasks with LLMs exist, namely: prompting (for example, prompting LLMs directly with time series data as raw text), quantization (for example, discretizing time series into bins), aligning (for example, learning time series embeddings aligned with language), vision as bridge (for example, plotting time series and using vision-language models), tool integration (for example adopting LLMs to output dedicated tools). Most of the studies deal in tasks such as forecasting or classification and achieve performance that may overall be on par with existing models, which may usually be much more compact and efficient. Few studies tackle time series description, yet no informative evaluation may be provided. For example, some studies aim at creating 'foundational models' for time series, excluding the description task. For instance, a transformer model may be pretrained on many datasets (finance, healthcare, traffic, etc.), however, the model may neither be trained nor tested on industrial data.

According to a second aspect of the present disclosure, there are provided one or more computer program products comprising instructions which, when executed by one or more data processing apparatuses, cause the one or more data processing apparatuses to carry out the method of the first aspect of this disclosure.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure.

It is noted that the above aspects, examples and features may be combined with each other irrespective of the aspect involved.

These and other aspects will be apparent from and elucidated with reference to the embodiments as per the drawings described hereinafter.

## BRIEF DESCRIPTION OF THE FIGURES

Examples of the disclosure will be described in the following with reference to the following drawings.

Fig. 1      shows schematically a flow chart illustrating a method for automatically generating a textual description of time series according to the present disclosure;

Fig. 2      shows schematically an example of a cross-modal autoencoding module according to the present disclosure;

Fig. 3      shows schematically a flow chart illustrating a step of a method of training a deep learning model on a cross-modal autoencoding module according to the present disclosure;

Fig. 4a      shows an example of plotted BERT embeddings of common verbs describing time series trends;

Fig. 4b      shows an example of embeddings generated by a deep learning model trained using a method according to present disclosure;

Fig. 5      shows examples of model scores compared to a deep learning model trained using a cross-modal autoencoding module of the method according to the present disclosure;

Fig. 6a) to e)      shows examples of times series with corresponding descriptions written by a human annotator, generated by an off-the-shelf method, and generated by a deep learning model trained using a cross-modal autoencoding module of a method according to the present disclosure.

The figures are merely schematic representations and serve only to illustrate examples of the disclosure. Identical or equivalent elements are in principle provided with the same reference signs.

## DETAILED DESCRIPTION OF EMBODIMENTS

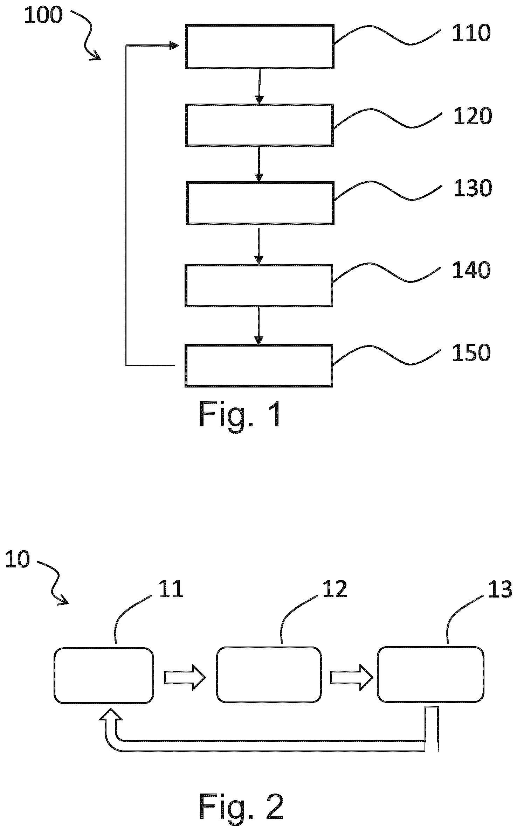

Fig. 1 shows schematically a flow chart illustrating a method 100 for automatically generating a textual description of time series for monitoring or forecasting a process variable. The method 100 comprises a plurality of steps.

In a step 110 of the method 100, a deep learning model may be trained or pretrained on or with the a cross-modal autoencoding module 10, which has, as shown in Fig. 2, an architecture consisting of a time series encoder 11, a text decoder 12 and a time series decoder 13.

In a step 120 of the method 100, time series data may be obtained by invoking readings of the temporal process variable, for example, from a sensor of a plant monitoring system, which may be selected or determined by a plant operator, in order to gain insights about a state of a plant. For example, the display may be triggered by the plant monitoring system itself, in case if an alarm threshold is crossed, which may be used to predict an alarm or failure or show an anomalously behaving signal as an explanation of the predicted event.

In a step 130 of the method 100, the time series data may be encoded, by means of the time series encoder 11 and based on the pretrained deep learning model, and an embedding may be generated as input for the text decoder 12. Alternatively or additionally, the text embedding serving as input to the time series decoder may be a concatenation of the outputs of the penultimate layer of the text decoder or a different kind of a hidden representation extracted from the text decoder depending on its architecture.

Subsequently, in a step 140 of the method 100, the generated embedding from the time series encoder 11 may be transferred or passed or fed to the text decoder, followed by a step 150 of the method 100, in which the textual description of time series may be generated, by means of the text decoder 12 and based on the pretrained deep learning model, based on the generated embedding of the encoded time series data from the time series encoder 11.

Optionally, the method 100 may further comprise a step of outputting the generated textual description of time series of the text decoder 12 by displaying a textual warning message or by outputting an audio message by means of a text-to-speech approach. The textual warning may be triggered by the variable of interest of the plant monitoring system, which may exceed a preset alarm threshold indicative of a failure of the system and/or an anomalously behaving signal as an explanation of a predicted harmful event. For example, the TTS may be, but not limited to be, a concatenative TTS, a parametric TTS, a deep learning TTS, such as Tacotron, a WaveNet or an End-to-End TTS, such as FastSpeech.

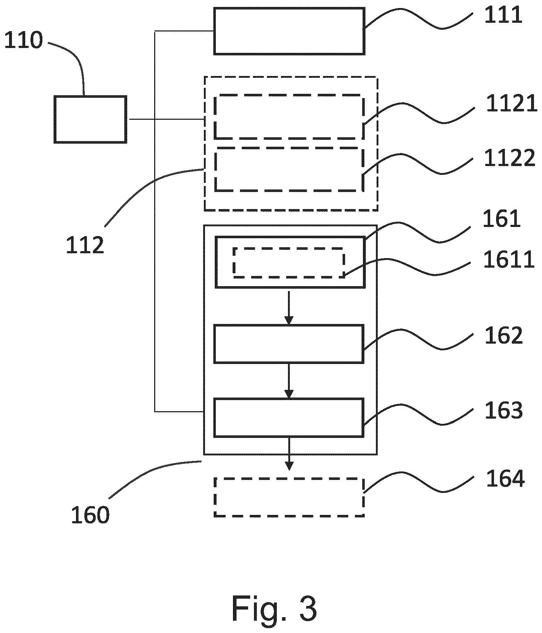

Fig. 3 shows the method step 110 of the training the deep learning model may comprise a substep 160, in which the time series decoder 13 may be used and the cross-modal autoencoding module 10 may be used for training the deep learning model. In addition or in parallel, the training step 110 of the method 110 may comprise a substep 111, in which the deep learning model may be pretrained in a self-supervised manner or approach on an unlabeled time series dataset comprising the unlabeled time series data and an unlabeled second time series dataset comprising the unlabeled second time series and/or on a corpus of time series description. The pretraining the time series encoder on unlabeled time series in the self-supervised manner may help improve the representation learning capacity of the model.

The training substep 160 of the training step 100 for the cross-modal autoencoding module 10 may further comprise a plurality of substeps, in particular, a substep 161 as an optional transfer learning method or approach, in which the time series encoder 11 and/or the text decoder 12 and/or the time series decoder 13 as per the cross-modal autoencoding module 10 may be initialized by means of a pretrained model. Optionally, the initializing substep 161 may further comprise a substep 1611, in which the time series encoder 11, the text decoder 12 and the time series decoder 13 may be initialized with pretrained model weights. Initializing the time series encoder, the text decoder and the time series decoder with pretrained model weights may provide advantages of enhanced performance, reduced training time and improved robustness. In particular, pretrained weights may capture generalized patterns and features from relatively large datasets, enabling models to learn more effectively and improving accuracy in producing the relevant textual description from the time series dataset. The deep learning model initialized with pretrained weights may converge faster, reducing the amount of the time series data and time needed to reach optimal performance. This is especially useful when data resources are limited.

Moreover, after that the time series encoder 11, the text decoder 12 and the time series decoder 13, as per the cross-modal autoencoding module 10, are initialized in the substep 161, a subsequent step 162 may be provided, in which the textual description of time series may be transferred from the text decoder 12 to the time series decoder 13.

In a substep 163, the time series data may be reconstructed by generating, by means of the time series decoder 13 and based on the deep learning model, the second time series data based on the generated textual description by the text decoder 12. Thus, the step 110 of the training the deep learning model may be performed with the cross-modal autoencoding module 10 based on the reconstructed second time series data.

As a summary, using the method 100 of automatic generation of textual time series descriptions and the respective system with the cross-modal-autoencoding module 10 having the time series encoder 11, the text decoder 12, and the time series decoder 13 in the architecture, the training technique of the cross-modal autoencoding may be provided, whereby the deep learning model generates textual descriptions of time series and reconstructs time series based on the generated or produced text, minimizing the loss on both tasks.

A backbone of the time series encoder 11 or of the text decoder 12 or of the time series decoder 13 may be a transformer or a long short-term memory, LSTM, such that hidden dimensions of each of the time series encoder 11, the text decoder 12 and the time series decoder 13 can be compatible with each other or can be adjusted with an extra linear layer. Further, each of the components, namely of the time series encoder 11, the text decoder 12 and the time series decoder 13, may be initialized with an existing pre-trained model. In addition, the time series encoder 11 and the time series decoder 13 may share the same structure and weights up until an encoder output layer of the time series encoder 11 may generate the embedding for the text decoder 12 and a decoder output layer of the time series decoder 13 may generate the reconstructed second time series data.

The training of the deep learning model may be enhanced by the cross-modal autoencoding, whereby the text decoder 12 may generate textual descriptions of time series, and the time series decoder 13 may reconstruct time series based on the embedding of the generated textual descriptions, simultaneously minimizing the loss on both tasks, such as categorical cross-entropy for text and MSE, mean square error, for time series. For balanced training, the loss for time series reconstruction may be scaled by a coefficient $\alpha$ for a balanced training, so that the combined loss L may be calculated by a function:

$$L = \alpha L_{txt} + (1 - \alpha)L_{tx},$$

wherein $L_{txt}$ may be a text generation loss and $L_{tx}$ may be a time series reconstruction loss.

For inference, in a substep 164, the time series decoder 13 may optionally be discarded.

The cross-modal autoencoding approach of the method 10 and the system may be implemented in the following several variations.

For example, the cross-modal autoencoding module 10 is used in parallel or before a final training or a fine tuning on a primary task of the generating 150 the textual description of time series.

Alternatively or additionally, the text embedding serving as input to the time series decoder 13 may be a concatenation of the outputs of the penultimate layer of the text decoder 12 or a different kind of a hidden representation extracted from the text decoder 12 depending on its architecture.

For example, the loss function for the reconstructing 163 the time series data may be a regression loss. For example, the loss function for time series reconstruction may be any appropriate regression loss, such as MSE (Mean Square Error), MAE (Mean Absolute Error) and RMSE (Root Mean Square Error).

The cross-modal autoencoding may use a variety of tasks. In other words, the reconstructing 163 the time series data for the cross-modal autoencoding module 10 may be performed as a task of a full reconstruction, a reconstruction of partially masked time series, or reordering of scrambled time series.

Further, the cross-modal autoencoding approach of the method 100 may be implemented as a contrastive learning approach.

Fig. 3 further shows that an augmentation approach may optionally be provided for the training 110 of the deep learning model, in addition or in parallel to the optional transfer learning approach, whereby the text decoder 12 may be either initialized with weights of an open-source (L)LM or pretrained on a text corpus containing time series descriptions or similar texts, and/or in addition or in parallel to the optional self-supervised pretraining approach, whereby the time series encoder 11 and the time series decoder 13 may be pretrained in a self-supervised way on a dataset of time series without any labels or annotations.

In a substep 112 of the method 110, the time series may be augmented for the training 110 of the deep learning model. The augmenting substep 112 may further comprise a substep 1121, in which an annotated time series dataset may be increased by adding noise to the annotated time series dataset, and/or a substep 1122, in which respective textual descriptions of the annotated time series dataset may be augmented by paraphrasing description using open source LLMs.

For example, the open-source LLMs may be, but not limited to be, GPT-based models, such as GPT-Neo, GPT-J, GPT-2 and GPT-3 from OpenAI, BERT and its variants, such as RoBERTa and DistilBERT, Mitral:7b, Gemma, Llama-2 or T5 as Text-to-Text Transfer Transformer. These models, typically built on transformer architectures, may excel at tasks like paraphrasing, summarization, and text generation. This may advantageously allow training a sufficiently accurate text generation model by relying on a small training dataset as starting training basis.

Using the parallel training approaches of the transfer learning approach, the self-supervised pretraining approach and/or the augmentation approach in addition to the cross-modal autoencoding approach, the method 100 of the present disclosure may advantageously allow training a sufficiently accurate text generation model, faithfully describing time series, without expensive data annotation - by relying on a small dataset and applying a combination of techniques enhancing the representation learning capability of a model, including the novel cross-modal autoencoding.

For a long time, automatic generation of time series descriptions was on the margin of the general NLG research and involved very elaborate rule-based systems. Even after the advent of rather powerful LMs, surprisingly few studies have tried using them in the time series domain. A rather recent example first learns to identify a predefined set of patterns in the input time series and then trains an LSTM-based network to generate a description based on the predicted patterns. A train set of 5700 time series descriptions has been crowdsourced for the task. In view of the surge in popularity of LLMs however, a number of studies have tried applying them to time series. A number of approaches tackling time series related tasks with LLMs exist, namely: prompting (for example, prompting LLMs directly with time series data as raw text), quantization (for example, discretizing time series into bins), aligning (for example, learning time series embeddings aligned with language), vision as bridge (for example, plotting time series and using vision-language models), tool integration (for example adopting LLMs to output dedicated tools). Most of the studies deal in tasks such as forecasting or classification and achieve performance that may overall be on par with existing models, which may usually be much more compact and efficient. Few studies tackle time series description, so no informative evaluation may be provided. For example, some studies aim at creating 'foundational models' for time series, such as excluding the description task. For instance, a transformer model may be pretrained on many datasets (finance, healthcare, traffic, etc.), however, the model may neither be trained nor tested on industrial data.

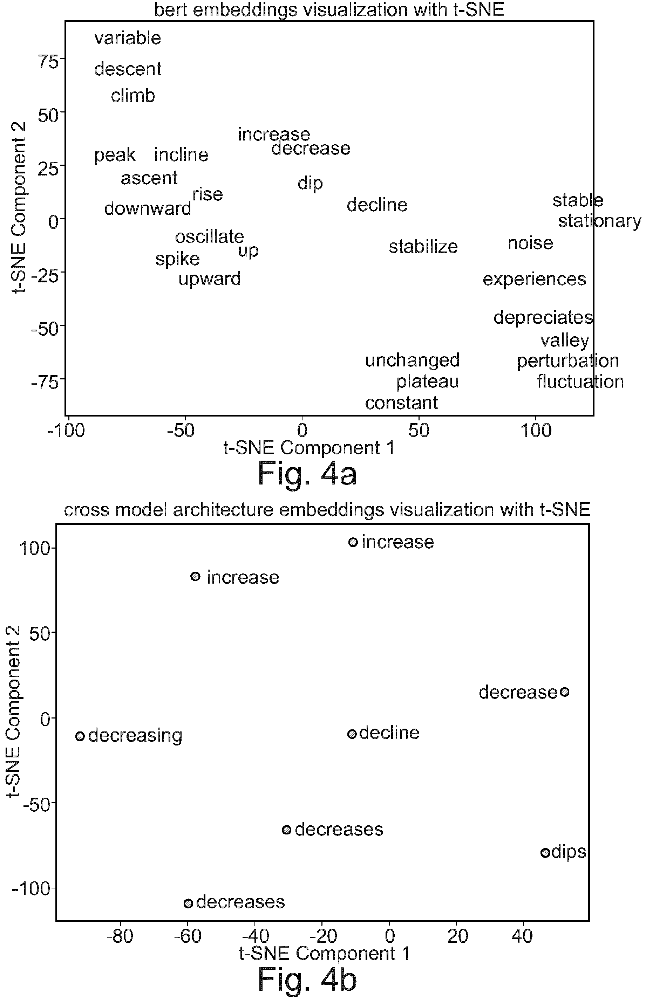

Fig. 4a and Fig. 4b show examples of plotted embeddings of common verbs describing time series trends using, respectively, BERT embeddings and embeddings generated using a deep learning model trained using the method 100 of the present disclosure. Two t-SNE (t-Distributed Stochastic Neighbor Embedding) components are plotted in the x- and y-axis, respectively as dimensionality reduction technique for visualizing complex data distributions by embedding it in a lower-dimensional 2D space while preserving the structure of data clusters and understanding feature embeddings.

A series of preliminary experiments have been run comparing the results of the method 100 with a few common existing methods: LLM prompting with raw time series directly, with rounded values and SAX-converted values (binning, or 'quantization'). For evaluation purposes, the experimenters refrain from using classic metrics such as BLEU, ROUGE, BERT score, etc., since they do not reflect faithfulness of descriptions ('Value is going up' and 'Value is going down', for instance, would be scored either equally or with negligeable difference). The reason is that these scores are either based on n-gram overlap between ground truth and predictions, which is not a useful accuracy indicator in this case, or on the similarity of word embeddings in the hidden space, where 'increase' and 'decrease' and their synonyms can be very close together due to the way word embeddings are learned in (L)LMs, which invalidates such metrics in the present use case.

Fig. 4a shows the plotted BERT (Bidirectional Encoder Representations from Transformers) embeddings of several common verbs describing time series trends. In Fig. 4a shows, for example, while words like 'stable' and 'stationary' are close in the embedding space and relatively far from their counterparts, antonyms pairs like 'descent' and 'climb', 'increase' and 'decrease' downward' and 'rise' are very close together, instead of words synonymous with 'increase' being grouped together and separated from those synonymous with 'decrease'.

Fig. 4b shows the visualization of the embeddings generated by the deep learning model trained using the method 100 of the present disclosure of a few common verbs describing time series trends extracted from the deep learning model after training. Reduplications are due to the fact that a generative model, in contrast to discriminative models like BERT, may produce different embeddings for the same words depending on the context. It may be observed that 'increase', 'decrease' and their variations are pronouncedly separated.

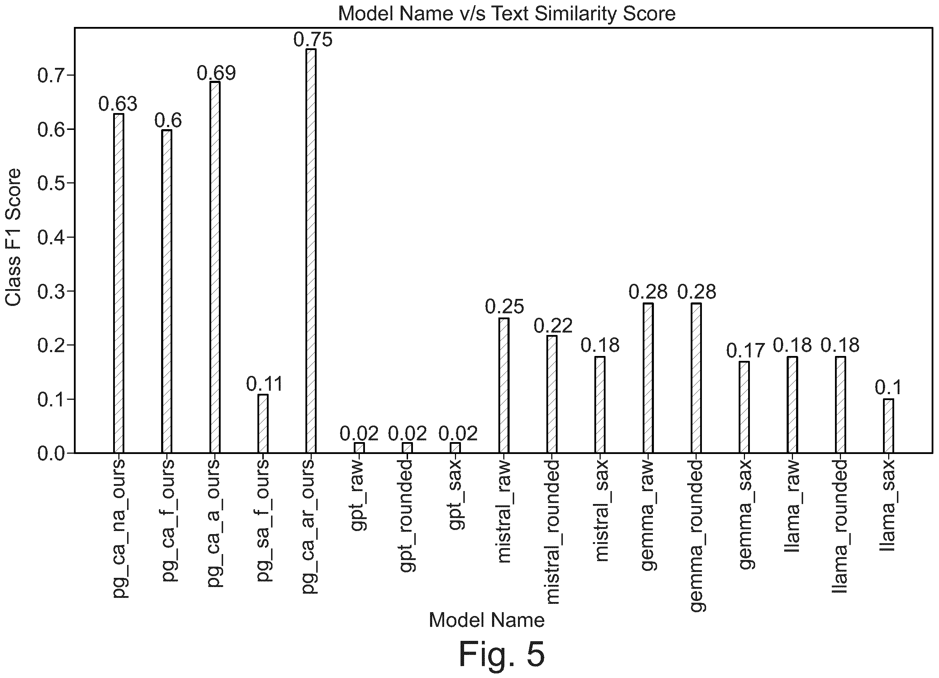

For evaluating the deep learning model of the method 100, Fig. 5 shows model comparison using F1 score based on manually labeled classes describing the main property of the time series 'increasing', 'decreasing', 'oscillating/noisy', 'stable', 'increasing first, then decreasing', 'decreasing first, then increasing'. The plot in Fig. 5 shows the score attained by different models comprising the deep learning model for the method of the present disclosure. A higher F1 score stands for a better score.

The baseline methods against which the method 100 or the approach is compared comprises off-the-shelf LLMs (locally deployed GPT-2, Mistral:7b, Gemma, and Llama-2), which are prompted directly (with raw time series as strings) or with discretized time series (either rounded to the nearest integer or transformed into a discrete symbolic representation using Symbolic Aggregate approximation, or SAX). The models are referred to in the plot as <LLM_name>_<time_series dtype>.

The deep learning model of the method 100 is all referred to using the format: pg_<attention>_<pretraining >, where 'pg' stands for 'PatchTST + GPT2' (models used for the time series encoder 11 and the time series decoder 13, and for the text decoder 12) 'attention' stands for cross-attention vs self-attention and 'pretraining' stands for the applied pretraining: no pretraining (na), forecasting (f), autoencoding (a), and cross-modal autoencoding (ar).

As shown in Fig. 5, the deep learning model trained using the method 100 with the cross-modal autoencoding module 10 as a pretraining strategy performs best on the unseen test set. It is followed by a further deep learning model of the method 100 of the present disclosure as well, but with other pretraining strategies. Off-the-shelf LLMs yielded significantly less accurate results. It may be hypothesized that the cross-modal autoencoding strategy of the present disclosure is key to learning word embeddings where words describing time series trends ('increase' and 'decrease', 'oscillate', etc.) are aligned with respective patterns in time series, which permits the deep learning model to learn to generate time series descriptions which are faithful to the input.

It is also worth noting that the deep learning model using the cross-modal autoencoding may be trained on word prediction and not on classification and thus does not require corresponding labels. Yet the high classification score is due to the proposed data-efficient pretraining technique.

In addition, the following table specifies the model size, the training and inference time, and the F1 scores for Fig. 5. It may be observed that off-the-shelf LLMs are not only much less accurate in time series descriptions, but also require an order of magnitude more GPU space, for example, with 30 to 40 times more parameters, as well as an order of magnitude longer inference time. In addition, using LLMs for time series description implies coming up with a prompt text, which is also time consuming and not robust.

| Model | Input Data Type | Attention | Pretrained | Size (B params) | Training Time (s) | inference Time (s) | F1 Score |
|---|---|---|---|---|---|---|---|
| PatchTST + GPT2 | numbers | Cross-attention | None | 0.238 | 179.00 | 20.70 | 0.633 |
| PatchTST + GPT2 | numbers | Cross-attention | Forecasting | 0.238 | 313.90 | 21.60 | 0.598 |
| PatchTST + GPT2 | numbers | Cross-attention | Autoencoding | 0.238 | 185.30 | 21.80 | 0.686 |
| PatchTST + GPT2 | numbers | Self-attention | Forecasting | 0.238 | 300.00 | 35.00 | 0.107 |
| PatchTST + GPT2 | numbers | Cross-attention | Cross-modal autoencoding | 0.238 | 229.99 | 28.06 | 0.747 |
| GPT2 | raw | Off the shelf | - | 0.137 | - | 89_75 | 0.016 |
| GPT2 | rounded | Off the shelf | - | 0.137 | - | 103.63 | 0.023 |
| GPT2 | sax | Off the shelf | - | 0.137 | - | 105.95 | 0.016 |
| Mistral:7b | raw | Off the shelf | - | 7.250 | - | 87228 | 0.252 |
| Mistral:7b | rounded | Off the shelf | - | 7.250 | - | 650.25 | 0.218 |
| Mistral:7b | sax | Off the shelf | - | 7.250 | - | 549_45 | 0.182 |
| Gemma | raw | Off the shelf | - | 8.540 | - | 1341.87 | 0.285 |
| Gemma | rounded | Off the shelf | - | 8.540 | - | 1086.18 | 0.280 |
| Gemma | sax | Off the shelf | - | 8540 | - | 916.32 | 0.168 |
| LLama2 | raw | Off the shelf | - | 6.740 | - | 1043.85 | 0.177 |
| LLama2 | rounded | Off the shelf | - | 6.740 | - | 719.18 | 0.183 |

(continued)

| Model | Input Data Type | Attention | Pretrained | Size (B params) | Training Time (s) | inference Time (s) | F1 Score |
|-------|-----------------|-----------|------------|-----------------|-------------------|--------------------|----------|
| LLama2 | sax | Off the shelf | - | 6_740 | - | 601.70 | 0.099 |

Thus, the results using the deep learning model of the method of the present disclosure show that the proposed model architecture and pretraining strategy may enable generation of descriptions that faithfully capture the properties of input time series, surpassing existing LLM prompting approaches both in accuracy, model size and inference time.

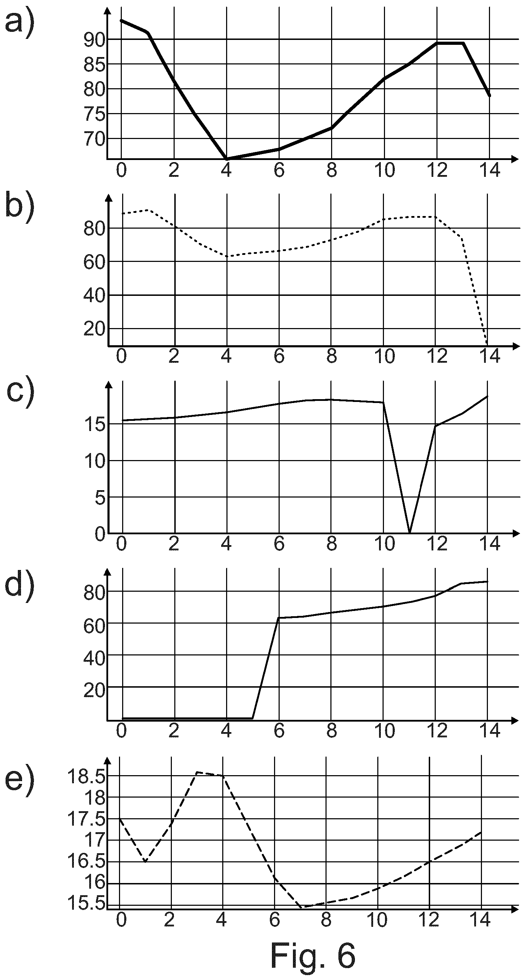

Fig. 6a) to 6e) shows examples of times series. Below are corresponding descriptions written by a human annotator $M_{HA}$, generated by a deep learning model trained using a cross-modal autoencoding module 10 of the method 100 according to the present disclosure $M_{CMA}$, and generated by an off-the-shelf method $M_{OTS}$.

The time series in the plots are sensor readings representing temperatures, levels, etc. Correspondingly, the y-axis represents their respective value range, while the x-axis represents the minutes within the given time window. For the solution to be generalizable, all specific process variables are replaced with a placeholder word 'variable', which can be substituted with a name of any concrete process variable or sensor as necessary.

Fig. 6a):

$M_{HA}$: The variable starts to fall initially, reaches its lowest point and then starts to rise gradually and later starts falling again;
$M_{CMA}$: The variable reduces gradually and then recovers back to decline at end;
$M_{OTS}$: The variable exhibits a generally irregular pattern with some fluctuations between decreasing and increasing values.

Fig. 6b):

$M_{HA}$: The variable decreases and grows slightly and at the end decreases rapidly;
$M_{CMA}$: The variable after rising, slowly decreases and then gradually increases again
but in the end, shows a sharp drop;
$M_{OTS}$: The variable exhibits a fluctuating trend with some values increasing significantly while others decrease notably.

Fig. 6c):

$M_{HA}$: After a very long and slow increase over a longer period, the variable falls sharply, rises again sharply at first and then slowly towards the end;
$M_{CMA}$: The variable slowly rises, then sharply dips and rises again at first, finally starts rising again;
$M_{OTS}$: The variable exhibits a generally increasing trend with some fluctuations and occasional significant decreases.

Fig. 6d):

$M_{HA}$: The variable rises sharply from a null state before a slower increasing phase and a final stabilization;
$M_{CMA}$: The variable rises sharply from a null state before it stabilizing at higher level;
$M_{OTS}$: The variable exhibits a generally increasing trend with some fluctuations around it.

Fig. 6e):

$M_{HA}$: After a small decrease and decrease, the variable has a significative but steady fall but once it reached a low point, it starts going back up;
$M_{CMA}$: The variable behaves like a modified sine wave;
$M_{OTS}$: The variable exhibits a generally irregular pattern, fluctuating between approximately 15 and 18, with some values trending slightly downward and others slightly upward.

As one can see from these examples, descriptions generated by a deep learning model trained using a cross-modal autoencoding tend to faithfully describe the plotted time series, close to human descriptions. By contrast, descriptions produced by off-the-shelf LLMs are very vague and not specific to the given time series.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SIGNS

| | |
|---|---|
| 10 | cross-modal autoencoding module |
| 11 | time series encoder |
| 12 | text decoder |
| 13 | time series decoder |
| 100 | method for automatically generating a textual description of time series |
| 110 | step of training a deep learning model |
| 111 | substep of pretraining a deep learning model in a self-supervised manner |
| 112 | substep of augmenting the time series data |
| 1121 | substep of increasing an annotated time series dataset by adding noise to the annotated time series dataset |
| 1122 | substep of increasing a respective textual description of annotated time series dataset by paraphrasing the textual description using open-source LLMs |
| 120 | step of obtaining time series data |
| 130 | step of encoding time series data |
| 140 | step of transferring a generated embedding |
| 150 | step of generating a textual description of time series |
| 160 | substep of training a time series decoder |
| 161 | substep of initializing a time series encoder and/or a text decoder and/or a time series decoder |
| 1611 | substep of initializing a time series encoder and a text decoder and a time series decoder with pretrained model weights |
| 162 | substep of transferring a textual description of time series |
| 163 | substep of reconstructing time series data |
| 164 | substep of discarding a time series decoder |

**Claims**

1. A method (100) for automatically generating a textual description of time series for monitoring or forecasting a process variable, comprising the steps of:

   training (110) a deep learning model on a cross-modal autoencoding module (10) having an architecture consisting of a time series encoder (11), a text decoder (12) and a time series decoder (13);
   obtaining (120) time series data by invoking readings of the temporal process variable;
   encoding (130), by means of the time series encoder (11) and based on the deep learning model, the time series data and generating an embedding as input for the text decoder (12);
   transferring (140) the generated embedding of the encoded time series data from the time series encoder (11) to the text decoder (12);
   generating (150), by means of the text decoder (12) and based on the deep learning model, the textual description of time series based on the embedding of the encoded time series data from the time series encoder (11).

2. The method (100) according to claim 1, wherein the training (110) the deep learning model comprises the substep of: training (160) the time series decoder (13) and enabling the cross-modal autoencoding module (10).

3. The method (100) according to claim 2,

wherein the training (160) the time series decoder (13) and the enabling the cross-modal autoencoding module (10) comprises the substeps of:

transferring (162) the textual description of time series from the text decoder (12) to the time series decoder (13);
reconstructing (163) the time series data by generating, by means of the time series decoder (13) and based on the deep learning model, second time series data based on the generated textual description;

wherein the training (110) the deep learning model is performed with the cross-modal autoencoding module (10) based on the reconstructed second time series data.

4. The method (100) according to claim 3,
wherein a loss for the reconstructing (163) the time series data is scaled by a coefficient $\alpha$ for a balanced training, so that the combined loss L is calculated by a function

$$L = \alpha L_{txt} + (1 - \alpha)L_{tx},$$

wherein $L_{txt}$ is a text generation loss and $L_{tx}$ is a time series reconstruction loss.

5. The method (100) according to one of the preceding claims,
wherein the loss function for the reconstructing (163) the time series data is a regression loss.

6. The method (100) according to one of the preceding claims 2 to 5,
wherein the training (160) the time series decoder (13) and the enabling the cross-modal autoencoding module (10) comprises the substep of:
initializing (161) the time series encoder (11) and/or the text decoder (12) and/or the time series decoder (13) by means of a pretrained model.

7. The method (100) according to one of the preceding claims,
wherein the initializing (161) the time series encoder (11) and/or the text decoder (12) and/or the time series decoder (13) comprises the substep of:
initializing (1611) the time series encoder (11) and the text decoder (12) and the time series decoder (13) with pretrained model weights.

8. The method (100) according to one of the preceding claims, wherein the training (110) the deep learning model further comprises the substep of:
pretraining (111) the deep learning model in a self-supervised manner on an unlabeled time series dataset and/or an unlabeled second time series dataset and/or on a corpus of time series descriptions.

9. The method (100) according to one of the preceding claims,
wherein the training (110) the deep learning model further comprises the substep of discarding (165) the time series decoder.

10. The method (100) according to one of the preceding claims, wherein the training (110) the deep learning model further comprises the substep of:
augmenting (112) the time series dataset for the training (110) the deep learning model, comprising the substeps of:

increasing (1121) an annotated time series dataset by adding noise to the annotated time series dataset; and/or
increasing (1122) a respective textual description of the annotated time series dataset by paraphrasing the textual description using open-source LLMs.

11. The method (100) according to one of the preceding claims 3 to 10,
wherein the reconstructing (163) the time series data for the cross-modal autoencoding module (10) is performed as a task of a full reconstruction, a reconstruction of partially masked time series, or reordering of scrambled time series.

12. The method (100) according to one of the preceding claims,
wherein the cross-modal autoencoding module (10) is used in parallel or before a final training or a fine tuning on a primary task of the generating (150) the textual description of time series.

13. The method (100) according to one of the preceding claims,
wherein the cross-modal autoencoding module (10) is performed as a contrastive learning approach.

14. The method (100) according to one of the preceding claims,
wherein a backbone of the time series encoder (11) or of the text decoder (12) or of the time series decoder (13) is a transformer or a long short-term memory, such that hidden dimensions of each of the time series encoder (11), the text decoder (12) and the time series decoder (13) can be compatible with each other or can be adjusted with an extra linear layer.

15. The method (100) according to one of the preceding claims,
wherein the time series encoder (11) and the time series decoder (13) share the same structure and weights up until an encoder output layer of the time series encoder (11) generates the embedding for the text decoder (12) and a decoder output layer of the time series decoder (13) generates the reconstructed second time series data.

16. The method (100) according to one of the preceding claims, further comprising the step of:
outputting the generated textual description of time series of the text decoder (12) by displaying a textual warning message or by outputting an audio message by means of a text-to-speech approach.

17. A computer program, comprising machine-readable instructions which, when executed by one or more data processing apparatuses, cause the one or more data processing apparatuses to perform a method (100) of any one of claims 1 to 16.

18. A data processing system configured to carry out the method (100) of any one of claims 1 to 16.

Fig. 1

Fig. 2

Fig. 3

Fig. 4a

Fig. 4b

Model Name v/s Text Similarity Score

Fig. 5

Fig. 6

Europäisches
Patentamt

European
Patent Office

Office européen
des brevets

# EUROPEAN SEARCH REPORT

**Application Number**

EP 24 21 3908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/059580 A1 (NEC LAB AMERICA INC [US]) 13 April 2023 (2023-04-13) * paragraphs [0037] - [0044], [0049], [0061], [0066] - [0094], [0104], [0105]; figures 5, 7 * ----- | 1-18 | INV. G06N3/0442 G06N3/0455 G06N3/0475 G06F40/56 |

**TECHNICAL FIELDS SEARCHED (IPC)**

G06F
G06N

The present search report has been drawn up for all claims

| Place of search | Date of completion of the search | Examiner |
|---|---|---|
| The Hague | 15 April 2025 | Keane, Shane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 3908

This annex lists the patent family members relating to the patent documents cited in  the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | Publication date |
|---|---|---|---|
| WO 2023059580 A1 | 13-04-2023 | US 2023109729 A1 | 13-04-2023 |
|  |  | WO 2023059580 A1 | 13-04-2023 |

EPO FORM P0459

For more details about this annex : see Official Journal of the European Patent Office, No. 12/82